# FASCICULE DE BREVET EUROPEEN

(11) **EP 1 379 100 B1**
(45) Date de publication et mention de la délivrance du brevet: **17.06.2009**
(21) Numéro de dépôt: 03291586.0
(22) Date de dépôt: 27.06.2003
(51) Int. Cl.: H04Q 11/00

(54) **Brasseur optique d'architecture multigranulaire**
Optischer Kreuzschienenverteiler mit granularer Architektur
Optical cross-connect with multigranular architecture

(30) Priorité: 04.07.2002 FR 0208376
(43) Date de publication de la demande: 07.01.2004
(73) Titulaire: Alcatel Lucent, 75008 Paris (FR)
(72) Inventeur: Noirie, Ludovic, 91620 Nozay (FR); Penninckx, Denis, 91620 Nozay (FR)
(74) Mandataire: Sciaux, Edmond

(56) Documents cités:
- EP-A- 0 397 370
- EP-A- 1 162 855
- EP-A- 1 193 995
- NOIRIE L ET AL: "Impact of intermediate traffic grouping on the dimensioning of multi-granularity optical networks" OPTICAL FIBER COMMUNICATION CONFERENCE. (OFC). TECHNICAL DIGEST POSTCONFERENCE EDITION. ANAHEIM, CA, MARCH 17 - 22, 2001, TRENDS IN OPTICS AND PHOTONICS SERIES. TOPS. VOLUME 54, WASHINGTON, WA: OSA, US, vol. 1 OF 4, 17 mars 2001 (2001-03-17), pages TuG3-1-TuG3-3, XP010545754 ISBN: 1-55752-655-9

## Description

La présente invention concerne un brasseur optique d'architecture multigranulaire destiné à être utilisé dans un noeud de communication d'un réseau de télécommunications optiques.

Les réseaux optiques sont destinés à véhiculer des trafics de données numériques très importants sur des échelles continentales et intercontinentales, par exemple pour des applications multimédia sur Internet. La technologie optique permet actuellement d'assurer des débits de l'ordre du Tera (10¹²) bits par second sur une fibre, sans atteindre les limites théoriques qui sont bien supérieures. Elle est donc la solution d'avenir pour l'échange d'informations à forte densité, notamment pour la voix et la vidéo.

Les réseaux de télécommunications optiques connus utilisant le principe de la commutation comportent des noeuds de communication munis de brasseurs rapides pour aiguiller des groupes de signaux optiques porteurs de données numériques, généralement par modulation d'amplitude d'ondes porteuses optiques.

Le document intitulé « Multi-Granularity Optical Cross-Connect » L. Noirie et autre, Paper 9.2.4, European Conference on Optical Communication 2001, Munich Germany, 3-7 Septembre 2001 présente un brasseur optique à trois niveaux de granularité c'est-à-dire capable de router des groupes de données à destination commune par longueur d'onde, par bande de longueur d'onde et par fibre optique.

Cette approche multigranulaire permet d'accroître la capacité du réseau de transmission tout en gardant un niveau de complexité raisonnable pour la commutation.

Un tel brasseur comprend trois étages de commutation optique pour les longueurs d'onde, les bandes de longueurs d'onde et les fibres optiques respectivement. Chaque étage utilise une matrice de commutation optique qui a pour fonction d'aiguiller des groupes de signaux optiques numériques au moyen respectivement d'un ensemble de ports d'entrée et de ports de sortie dits d'aiguillage dans ce texte.

Dans un mode de réalisation présenté, des ports additionnels de sortie de la matrice dédiée aux bandes de longueurs d'onde sont interconnectés à des ports additionnels d'entrée de la matrices dédiée aux longueurs d'onde via des moyens de démultiplexage en longueur d'onde. Symétriquement, des ports de sortie additionnels de la matrices dédiée aux longueurs d'onde sont interconnectés à des ports additionnels d'entrée de la matrice dédiée aux bandes de longueurs d'onde via des moyens de multiplexage en longueur d'onde. Grâce à ces ports additionnels dits de redirection dans ce texte, des réarrangements (« grooming » en anglais) des données associées aux longueurs d'onde au sein de chaque bande de longueurs d'onde sont possibles en dynamique.

Cependant, dans une telle configuration, la matrice de commutation en bande de longueurs d'onde comporte un nombre total de ports très important ce qui augmente son coût de fabrication tout comme le coût de ses interfaces. En outre, cela introduit des pertes de transmission élevées nécessitant d'être compensées par des amplificateurs et cela réduit les distances de transmission possibles de données par bandes de longueurs d'onde.

Le document EP 1.193.995 décrit un brasseur optique a multigranularité comportant une seule et même matrice de commutation pour commuter tous les niveaux de granularité a la fois. Selon les besoins, c'est-à-dire selon le trafic à commuter, des nombres adaptes de ports de la matrice unique sont affectes respectivement à un niveau de granularité faible (les longueurs d'onde), à un niveau de granularité intermédiaire (les bandes de longueurs d'onde), enfin à un niveau de granularité élevé (les fibres). ce brasseur connu comprend:
- p1 ports d'entrée recevant respectivement p1 longueurs d'onde, p2 ports de sortie, et des premiers moyens d'aiguillage aptes a aiguiller les longueurs d'onde reçues sur lesdits p1 ports d'entrée sélectivement vers lesdits p2 ports de sortie, et/ou
- q1 ports d'entrée recevant respectivement q1 bandes de longueurs d'onde,
- q2 ports de sortie, et des seconds moyens d'aiguillage aptes a aiguiller les bandes de longueurs d'onde reçues sur lesdits q1 ports d'entrée sélectivement vers lesdits q2 ports de sortie, et/ou
- r1 ports d'entrée recevant respectivement r1 groupements de bandes, r2 ports de sortie, et des troisièmes moyens d'aiguillage aptes a aiguiller les groupements de bandes reçus sur lesdits r1 ports d'entrée sélectivement vers lesdits r2 ports de sortie.

Ces premiers, seconds et troisièmes moyens d'aiguillage sont constitués d'une matrice de commutation unique apte à coupler l'un quelconque desdits p1 +q1 +r1 ports d'entrée à l'un quelconque desdits p2 +q2 + r2 ports de sortie.

Cependant, dans cette seconde configuration, la matrice de commutation unique comporte un nombre total de ports qui est encore important.

La présente invention a pour but de proposer un brasseur optique ayant une complexité encore plus réduite, et permettant une redirection de bandes de longueurs d'onde (en dynamique) optimisée.

A cet effet, l'invention fournit un brasseur optique d'architecture multigranulaire comportant
- un premier étage de commutation de signaux optiques numériques composites, chaque signal composite étant formé d'une pluralité de signaux optiques numériques dans une bande de longueur d'onde donnée, étage comportant:
   - une première matrice optique de commutation ayant des ports d'entrée d'aiguillage et des ports de sortie d'aiguillage et ayant des ports d'entrée de redirection et des ports de sortie de redirection,
   - un nombre p supérieur ou égal à 2 de moyens de démultiplexage en bande de longueurs d'onde, chacun étant connecté à desdits ports d'entrée d'aiguillage distincts,
   - p moyens de multiplexage en bande de longueurs d'onde chacun étant connecté à desdits ports de sortie d'aiguillage distincts,
- un deuxième étage de commutation de signaux optiques numériques comportant:
   - une matrice de commutation dite deuxième matrice ayant des ports d'entrée d'aiguillage et des ports de sortie d'aiguillage,
   - un ensemble de moyens de démultiplexage en longueur d'onde, chacun desdits moyens étant connecté à des ports d'entrée d'aiguillage distincts de la deuxième matrice,
   - un ensemble de moyens de multiplexage en longueur d'onde, chacun desdits moyens étant connecté à desdits ports de sortie d'aiguillage distinct de la deuxième matrice,
lesdits ports de sortie de redirection de la première matrice étant couplés avec lesdits ports d'entrée d'aiguillage de la deuxième matrice via ledit ensemble de moyens de démultiplexage en longueur d'onde pour obtenir la redirection en dynamique de signaux composites du premier étage vers le deuxième étage,
**caractérisé** en ce que la première matrice optique est composée d'une série de sous-matrices optiques de commutation disposées en parallèle et indépendantes,
**et en ce que,** le nombre de ports de sortie de redirection de la première matrice étant supérieur au nombre de moyens de démultiplexage en longueur d'onde, le brasseur comprend un concentrateur optique ayant plus de ports d'entrée connectés auxdits ports de sortie de redirection de la première matrice que de ports de sortie connectés auxdits moyens de démultiplexage en longueur d'onde.

L'utilisation des sous-matrices selon l'invention au lieu d'une matrice unique comme dans l'art antérieur réduit le coût de l'étage de commutation pour les bandes de longueurs d'onde. La fabrication de ces sous-matrices est en outre plus simple, et l'ensemble de ces sous-matrices est moins encombrant qu'une matrice unique donc plus facilement intégrable.

En outre, dans cette configuration de brasseur, pour rendre possible le maximum de redirection de signaux composites donc des bandes de longueurs d'onde, il est nécessaire de disposer de davantage de ports de redirection que pour une matrice unique qui aiguille les bandes de longueurs d'onde sans distinction. Les ports de redirection sont judicieusement répartis entre les différentes sous-matrices.

Néanmoins, statistiquement parlant, il peut être démontré que l'ensemble de ces ports de sortie de redirection ne sont pas utilisés simultanément. Ceci est possible en calculant le nombre moyen de ports de redirection utilisés simultanément et le nombre maximum de ports utilisables à partir de la connaissance des fluctuations du trafic. Ces fluctuations vont dépendre des variations du nombre d'utilisateurs connectés au brasseur, des variations du nombre de connexions et des variations des temps de connexion par utilisateur. On en déduit que le nombre de moyens de démultiplexage en longueur d'onde susceptibles de recevoir simultanément des bandes de longueurs d'onde peut être inférieur au nombre de ports de sortie de redirection. Cela permet d'éviter un surconsommation des interfaces et un surdimensionnement donc un surcoût de la deuxième matrice. En outre, c'est le concentrateur optique selon l'invention qui va gérer la redirection dynamique de signaux composites entre le premier étage et le deuxième étage.

Avantageusement, l'ensemble de moyens de multiplexage en longueur d'onde peut comprendre au moins un moyen de démultiplexage en longueur d'onde cyclique, ledit moyen étant de préférence choisi parmi les entrelaceurs optiques et les réseaux de guides.

Un moyen de démultiplexage en longueur d'onde cyclique va permettre de démultiplexer n'importe quelle bande de longueur d'onde transmise par le concentrateur donc d'augmenter pour les longueurs d'onde de chaque bande les accès à la deuxième matrice.

Un concentrateur optique selon l'invention peut également comprendre au moins un port d'extraction de signaux composites notamment destinés à un réseau local connecté audit brasseur.

Dans un mode de réalisation avantageux, lesdits p moyens de démultiplexage en bande de longueurs d'onde sont munis de n ports de sortie, n étant supérieur ou égal à 2 et correspondant au nombre total de bandes de longueurs d'onde traitées dans ledit brasseur. Et ladite série de sous-matrices comprend n sous-matrices, chacune étant dédiée à une bande de longueurs d'onde distincte, comprenant p ports de redirection d'entrée de sortie ainsi que p ports d'aiguillage d'entrée et de sortie.

Dans ce dernier mode, l'ensemble de moyens de démultiplexage en longueur d'onde peut comporter un nombre m inférieur à nxp de moyens de démultiplexage en longueur d'onde cycliques, ledit concentrateur comprend nxp ports d'entrée et m ports de sortie pour la redirection dynamique de signaux composites du premier étage vers le deuxième étage.

Dans un mode de réalisation préféré, le nombre de ports d'entrée de redirection de la première matrice est supérieur au nombre de moyens de multiplexage en longueur d'onde et le brasseur comprend un déconcentrateur optique ayant plus de ports de sortie connectés auxdits ports d'entrée de redirection de la première matrice que de ports d'entrée connectés auxdits moyens de multiplexage en longueur d'onde pour obtenir une redirection dynamique de signaux composites du deuxième étage vers le premier étage.

De manière similaire au concentrateur optique, le déconcentrateur va optimiser la redirection en dynamique de signaux composites du deuxième étage vers le premier étage.

Le déconcentrateur optique peut également comprendre au moins un port d'insertion de signaux composites pour leur injection dans le trafic.

De préférence, l'ensemble de moyens de multiplexage en longueur d'onde comprend au moins un moyen de multiplexage en longueur d'onde cyclique de préférence choisi parmi les entrelaceurs optiques et les réseaux de guides.

Un moyen de multiplexage cyclique va permettre de multiplexer des longueurs d'onde de n'importe quelle bande de longueur d'onde et donc d'augmenter pour les longueurs d'ondes le choix des ports de sortie de la deuxième matrice.

Dans une configuration de l'invention, lesdits p moyens de multiplexage en bande de longueurs d'onde sont munis de n ports d'entrée, n étant supérieur ou égal à 2 et correspondant au nombre total de bandes de longueurs d'onde traitées dans ledit brasseur. Et ladite série de sous-matrices comprend n sous-matrices, chacune étant dédiée à une bande de longueurs d'onde distincte, comprenant p ports de redirection d'entrée et de sortie ainsi que p ports d'aiguillage d'entrée et de sortie.

Dans cette configuration, l'ensemble de moyens de multiplexage en longueur d'onde peut comporter un nombre m' inférieur à nxp de moyens de multiplexage en longueur d'onde cycliques et ledit déconcentrateur comprend m' ports d'entrée et nxp ports de sortie pour la redirection dynamique de signaux composites du deuxième étage vers le premier étage.

Par ailleurs, pour réaliser des conversions de bandes et/ou de longueurs d'onde le deuxième étage peut comprendre au moins une source optique modulée accordable en longueur d'onde connectée à une branche d'entrée d'un des moyens de multiplexage en longueur d'onde.

La deuxième matrice peut être optique ou électrique. Si la deuxième matrice est électrique le deuxième étage comprend des convertisseurs optique/électrique connectés aux ports d'entrée d'aiguillage de la deuxième matrice ainsi que des convertisseurs électrique/optique connectés aux ports de sortie d'aiguillage de la deuxième matrice.

De préférence, le brasseur peut comprendre un troisième étage de commutation de signaux optiques numériques dédiés fibre, chaque signal dédié fibre comprenant des signaux optiques numériques de plusieurs bandes transportées par une même fibre optique.

L'invention s'applique naturellement à un noeud de communication comportant un brasseur tel que décrit précédemment.

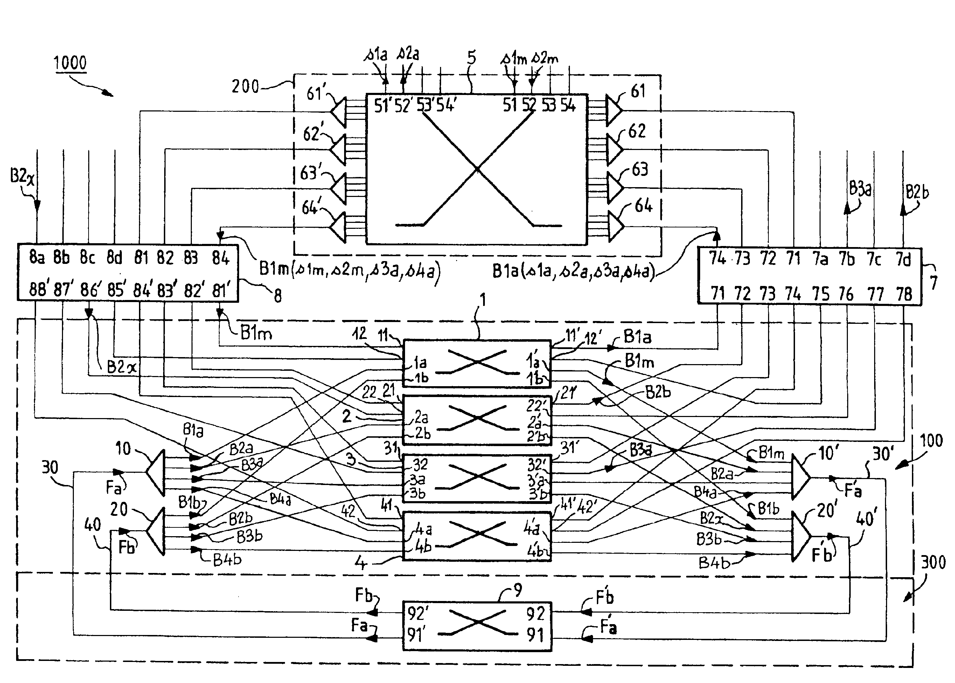

Les caractéristiques et objets de la présente invention ressortiront de la description détaillée donnée ci-après en regard de la figure annexée, présentée à titre illustratif et nullement limitatif.

La figure unique représente, dans un mode de réalisation préféré de l'invention, un brasseur optique 1000 de signaux optiques numériques, chacun sous forme d'une onde optique porteuse modulée par exemple en amplitude.

Le brasseur optique 1000 d'architecture multigranulaire comporte:
- un premier étage 100 de commutation de signaux optiques numériques composites, chaque signal composite étant formé d'une pluralité de signaux optiques numériques dans une bande de longueur d'onde donnée,
- un deuxième étage 200 de commutation de signaux optiques numériques par longueur d'onde,
- un troisième étage 300 de commutation de signaux optiques numériques dédiés fibre, chaque signal dédié fibre comprenant des signaux optiques numériques de plusieurs bandes transportées par une même fibre optique.

Le premier étage 100 comporte:
- quatre sous-matrices optiques de commutation indépendantes 1 à 4, disposées en parallèle, chacune étant dédiée à une bande de longueurs d'onde distincte et comprenant deux ports d'entrée d'aiguillage la à 4b, deux ports de sortie d'aiguillage 1'a à 4'b, deux ports d'entrée de redirection 11 à 42 et deux ports de sortie de redirection 11' à 42',
- deux moyens de démultiplexage en bande de longueurs d'onde 10, 20, chaque moyen 10, 20 étant apte à séparer des signaux composites selon leur bande distincte de longueurs d'onde et étant muni de quatre ports de sortie correspondant au nombre total de bandes de longueurs d'onde traitées dans le brasseur 1000, les ports de sortie de chaque moyen 10, 20 étant connectés à quatre ports d'entrée d'aiguillage 1a à 4a, 1b à 4b respectivement de sous-matrices distinctes 1 à 4,
- deux moyens de multiplexage en bande de longueurs d'onde 10', 20', chacun moyen 10', 20' étant apte à combiner des signaux composites distincts et étant muni de quatre ports d'entrée connectés à quatre ports de sortie d'aiguillage 1'a à 4'a, 1'b à 4'b respectivement de sous-matrices distinctes 1 à 4.

Le deuxième étage 200 comporte:
- une matrice optique de commutation par longueur d'onde dite deuxième matrice 5 ayant trente-deux ports d'entrée et de sortie d'aiguillage, quatre ports d'insertion 51 à 54 de signaux optiques numériques et quatre ports d'extraction 51' à 54' de signaux optiques numériques,
- quatre moyens de démultiplexage en longueur d'onde cycliques 61 à 64, par exemple de type réseau de guides, chaque moyen comportant quatre branches de sortie connectées à des ports d'entrée d'aiguillage distincts de la deuxième matrice,
- quatre moyens de multiplexage en longueur d'onde cycliques 61' à 64', par exemple de type réseau de guides, chaque moyen comportant quatre branches d'entrée connectées à des ports de sortie d'aiguillage distincts de la deuxième matrice.

Pour la redirection dynamique de signaux composites du premier étage 100 vers le deuxième étage 200, le brasseur 1000 comporte un concentrateur optique comprenant :
- huit ports d'entrée 71 à 78, connectés aux huit ports de sortie de redirection 11' à 42',
- et quatre ports de sortie 71' à 74' respectivement connectés aux quatre moyens dedémultiplexage cycliques 61 à 64.

Le concentrateur 7 comporte en outre quatre ports d'extraction 7a à 7d de signaux composites par exemple destinés à un réseau local (non représenté) connecté au noeud de communication (non représenté) muni du brasseur 1000.

Pour la redirection dynamique de signaux composites du deuxième étage 200 vers le premier étage 100, le brasseur 1000 comporte un déconcentrateur optique 8 comprenant :
- quatre ports d'entrée 81 à 84 connectés aux quatre moyens de démultiplexage cycliques 61' à 64',
- et huit ports de sortie 81' à 84' respectivement connectés aux huit ports d'entrée de redirection 11 à 42.

Le déconcentrateur 8 comporte en outre quatre ports d'insertion 8a à 8d de signaux composites par exemple émis par un réseau local (non représenté) connecté au noeud de communication (non représenté) muni du brasseur 1000.

Enfin, le troisième étage 300 comporte une matrice de commutation 9 ayant deux ports d'insertion 91, 92 de signaux dédiés fibre connectés aux moyens de multiplexage en bande de longueurs d'onde 10', 20' respectivement par des fibres optiques de liaison 30', 40' ainsi que deux ports d'extraction de signaux dédiés fibre 91', 92' connectés aux moyens de démultiplexage en bande de longueurs d'onde 10, 20 par des fibres optiques de liaison 30, 40.

Les ports d'entrée et de sortie d'aiguillage de la matrice 9 et les fibres optiques d'entrée et de sortie ne sont pas représentés par souci de simplification.

Décrivons un exemple de fonctionnement du brasseur 1000.

Deux signaux dédiés fibre Fa, Fb comportant les mêmes quatre bandes de longueurs d'onde B1a à B4a, B1b à B4b sont démultiplexés par bande de longueurs d'onde par les moyens 10, 20 pour séparer quatre signaux composites destinés à être aiguiller par des sous-matrices distinctes 1 à 4. Les signaux composites sont symbolisés sur la figure en référence à leur bande.

Le signal composite B1 a est délivré par le port de redirection 11' au concentrateur optique 7 qui le dirige vers le moyen de démultiplexage en longueur d'onde cyclique 64 pour séparer les quatre signaux optiques numériques s1a à s4a de longueur d'onde porteuse distincte. Les signaux numériques s1a et s2a sont dirigés vers un utilisateur d'un réseau local (non représenté) via les ports d'extraction 51', 52'. Un signal optique numérique s1m de même longueur d'onde porteuse que le signal numérique s1a est injecté dans la matrice 5 via le port d'insertion 51. De même, un signal optique numérique s2m de même longueur d'onde porteuse que le signal numérique s2a est injecté dans la matrice via le port d'insertion 52. Ces signaux injectés s1m, s2m sont combinés aux signaux s3, s4 par le moyen 64' pour former un signal composite B1m qui traverse successivement le déconcentrateur 8 et la sous-matrice 1 avant de déboucher sur le moyen de multiplexage en bande de longueurs d'onde 10'.

Le signal composite B2b est délivré par le port de redirection 21' au concentrateur optique 7 qui le fournit à un réseau local via le port d'extraction 7d. Parallèlement, un signal composite B2x ayant la même bande de longueur d'onde que le signal B2b est injecté via le port d'insertion 8a dans le déconcentrateur 8 puis traverse la sous-matrice 2 dédiée à cette bande avant de déboucher sur le moyen de multiplexage en bande de longueurs d'onde 20'.

De même, le signal composite B3a est délivré par le port de redirection 32' au concentrateur optique 7 qui le fournit à un réseau local via le port d'extraction 7b.

Enfin, les signaux composites B2a, B4a, B1b, B3b, B4b sont aiguillés par la sous-matrice dédiée à leur bande et débouchent sur l'un des moyens de multiplexage en bande de longueurs d'onde 10' ou 20'.

Deux signaux dédiés fibre F'a, F'b sont formés par les moyens de multiplexage en bande de longueurs d'onde 10, 20.

Dans une première variante de ce mode de réalisation (non représentée), le brasseur ne comporte pas de troisième étage de sorte que les fibres optiques de transmission sont reliées directement aux moyens de démultiplexage en bande de longueurs d'onde et aux moyens de multiplexage en bande de longueurs d'onde.

Dans une deuxième variante de ce mode de réalisation (non représentée), les quatre moyens de démultiplexage en longueur d'onde cycliques peuvent être remplacés par quatre moyens de démultiplexage en longueur d'onde dédiés respectivement au démultiplexage d'une bande distincte plus un moyen de démultiplexage en longueur d'onde cyclique associés à quatre nouveaux ports d'entrée à la deuxième matrice. Et un remplacement analogue peut aussi être effectué pour les quatre moyens de multiplexage en longueur d'onde cycliques.

Bien entendu, l'invention n'est pas limitée au mode de réalisation qui vient d'être décrit.

La matrice du deuxième étage peut aussi bien être électrique et dans cette configuration être disposée entre seize convertisseurs optique/électrique en parallèle (côté entrée) et seize convertisseurs électrique/optique en parallèle (côté sortie).

En cas de nécessité de conversion de longueurs d'onde, une ou plusieurs branches d'entrée d'un ou plusieurs multiplexeurs en longueur d'onde peuvent être connectées à des sources optiques modulées de longueur d'onde porteuse accordable.

Le nombre de ports d'insertion et d'extraction de la deuxième matrice, le nombre de fibres de liaison, le nombre de longueurs d'onde par bande et le nombre de bandes sont choisis à titre indicatifs.

Dans la deuxième matrice, le nombre de ports de sortie d'aiguillage peut être supérieur au nombre de ports d'entrée d'aiguillage.

Le nombre de ports de sortie du concentrateur et du déconcentrateur sont choisis en fonction des fluctuations du trafic et de son niveau moyen.

Enfin, on pourra remplacer tout moyen par un moyen équivalent sans sortir du cadre de l'invention.

## Revendications

1. Brasseur optique (1000) d'architecture multigranulaire comportant :
- un premier étage (100) de commutation de signaux optiques numériques composites, chaque signal composite étant formé d'une pluralité de signaux optiques numériques dans une bande de longueur d'onde donnée, étage comportant :
- une première matrice optique de commutation (1 à 4) ayant des ports d'entrée d'aiguillage (1a à 4b) et des ports de sortie d'aiguillage (1'a à 4'b) et ayant des ports d'entrée de redirection (11 à 42) et des ports de sortie de redirection (11' à 42'),
- un nombre p supérieur ou égal à 2 de moyens de démultiplexage en bande de longueurs d'onde (10, 20), chacun étant connecté à desdits ports d'entrée d'aiguillage distincts,
- p moyens de multiplexage en bande de longueurs d'onde (10', 20') chacun étant connecté à desdits ports de sortie d'aiguillage distincts,
- un deuxième étage (200) de commutation de signaux optiques numériques comportant :
- une matrice de commutation dite deuxième matrice (5) ayant des ports d'entrée d'aiguillage et des ports de sortie d'aiguillage,
- un ensemble de moyens de démultiplexage en longueur d'onde (61 à 64), chacun desdits moyens étant connecté à des ports d'entrée d'aiguillage distincts de la deuxième matrice,
- un ensemble de moyens de multiplexage en longueur d'onde (61' à 64'), chacun desdits moyens étant connecté à desdits ports de sortie d'aiguillage distinct de la deuxième matrice,
lesdits ports de sortie de redirection de la première matrice étant couplés avec lesdits ports d'entrée d'aiguillage de la deuxième matrice via ledit ensemble de moyens de démultiplexage en longueur d'onde pour obtenir la redirection en dynamique de signaux composites du premier étage vers le deuxième étage,
**caractérisé en ce que** la première matrice optique est composée d'une série de sous-matrices optiques de commutation (1 à 4) disposées en parallèle et indépendantes,
et **en ce que**, le nombre de ports de sortie de redirection de la première matrice étant supérieur au nombre de moyens de démultiplexage en longueur d'onde, le brasseur comprend un concentrateur optique (7) ayant plus de ports d'entrée (71 à 78) connectés auxdits ports de sortie de redirection de la première matrice que de ports de sortie (71' à 74') connectés auxdits moyens de démultiplexage en longueur d'onde.

2. Brasseur (1000) selon la revendication 1 **caractérisé en ce que** ledit ensemble de moyens de démultiplexage en longueur d'onde (61 à 64) comprend au moins un moyen de démultiplexage en longueur d'onde cyclique (61 à 64).

3. Brasseur (1000) selon la revendication 1 **caractérisé en ce que** le concentrateur optique (7) comprend au moins un port d'extraction (7a à 7d) de signaux composites notamment destinés à un réseau local connecté audit brasseur.

4. Brasseur (1000) selon la revendication 1 **caractérisé en ce que** lesdits p moyens de démultiplexage en bande de longueurs d'onde (10, 20) sont munis de n ports de sortie, n étant supérieur ou égal à 2 et correspondant au nombre total de bandes de longueurs d'onde traitées dans ledit brasseur, et **en ce que** ladite série de sous-matrices comprend n sous-matrices (1 à 4), chacune étant dédiée à une bande de longueurs d'onde distincte, comprenant p ports de redirection d'entrée et de sortie ainsi que p ports d'aiguillage d'entrée et de sortie.

5. Brasseur (1000) selon la revendication 4 **caractérisé en ce que**, ledit ensemble de moyens de démultiplexage en longueur d'onde comporte un nombre m inférieur à nxp de moyens de démultiplexage en longueur d'onde cycliques (61 à 64) et **en ce que** ledit concentrateur (7) comprend nxp ports d'entrée (71 à 78) et m ports de sortie (71' à 74') pour la redirection dynamique de signaux composites du premier étage (100) vers le deuxième étage (200).

6. Brasseur (1000) selon la revendication 1 **caractérisé en ce que** le nombre de ports d'entrée de redirection (11 à 42) de la première matrice (1 à 4) est supérieur au nombre de moyens de multiplexage en longueur d'onde (61' à 64') et **en ce que** le brasseur comprend un déconcentrateur optique (8) ayant plus de ports de sortie (81' à 88') connectés auxdits ports d'entrée de redirection de la première matrice que de ports d'entrée (81 à 84) connectés auxdits moyens de multiplexage en longueur d'onde pour obtenir une redirection dynamique de signaux composites du deuxième étage (200) vers le premier étage (100).

7. Brasseur (1000) selon la revendication 6 **caractérisé en ce que** le déconcentrateur optique (8) comprend au moins un port d'insertion (8a à 8d) de signaux composites.

8. Brasseur (1000) selon la revendication 6 **caractérisé en ce que** ledit ensemble de moyens de multiplexage en longueur d'onde comprend au moins un moyen de multiplexage en longueur d'onde cyclique (61' à 64').

9. Brasseur (1000) selon la revendication 6 **caractérisé en ce que** lesdits p moyens de multiplexage en bande de longueurs d'onde (10, 20) sont munis de n ports d'entrée, n étant supérieur ou égal à 2 et correspondant au nombre total de bandes de longueurs d'onde traitées dans ledit brasseur, et **en ce que** ladite série de sous-matrices comprend n sous-matrices (1 à 4), chacune étant dédiée à une bande de longueurs d'onde distincte, comprenant p ports de redirection d'entrée et de sortie ainsi que p ports d'aiguillage d'entrée et de sortie.

10. Brasseur (1000) selon la revendication 9 **caractérisé en ce que** ledit ensemble de moyens de multiplexage en longueur d'onde comporte un nombre m' inférieur à nxp de moyens de multiplexage en longueur d'onde cycliques (61' à 64') et ledit déconcentrateur (8) comprend m' ports d'entrée (81 à 84) et nxp ports de sortie (81' à 88') pour la redirection dynamique de signaux composites du deuxième étage (200) vers le premier étage (100).

11. Brasseur selon la revendication 1 **caractérisé en ce que** le deuxième étage comprend au moins une source optique modulée accordable en longueur d'onde connectée à une branche d'entrée d'un des moyens de multiplexage en longueur d'onde.

12. Brasseur (1000) selon la revendication 1 **caractérisé en ce que** la deuxième matrice (5) est optique.

13. Brasseur selon la revendication 1 **caractérisé en ce que** la deuxième matrice est électrique et **en ce que** le deuxième étage comprend des convertisseurs optique/électrique connectés aux ports d'entrée d'aiguillage de la deuxième matrice ainsi que des convertisseurs électrique/optique connectés aux ports de sortie d'aiguillage de la deuxième matrice.

14. Brasseur (1000) selon la revendication 1 **caractérisé en ce qu'**il comprend un troisième étage de commutation (300) de signaux optiques numériques dédiés fibre, chaque signal dédié fibre comprenant des signaux optiques numériques de plusieurs bandes transportées par une même fibre optique.

15. Noeud de communication comportant un brasseur (1000) selon l'une des revendications 1 à 14.

16. Brasseur (1000) selon la revendication 2, **caracterisé en ce que** ledit moyen de démultiplexage est choisi parmi les desentrelaceurs optiques et les réseaux de guides

17. Brasseur (1000) selon la revendication 8, **caractérisé en ce que** ledit moyen de multiplexage en longueur d'onde cyclique (61' à 64') est choisi parmi les entrelaceurs optiques et les réseaux de guides.

## Claims

1. Optical cross-connect (1000) with multigranular architecture comprising:
- a first (100) digital optical signal switching stage, each composite signal being formed from a multiplicity of digital optical signals in a given wavelength band, stage comprising:
- a first optical switching matrix (1 to 4) having input steering ports (1a to 4b) and output steering ports (1'a to 4'b) and having input redirection ports (11 to 42) and output redirection ports (11' to 42'),
- a number p greater than or equal to 2 wavelength band demultiplexing means (10, 20), each being connected to separate input steering ports,
- p wavelength band multiplexing means (10', 20') each being connected to separate output steering ports,
- a second digital optical signal switching stage (200) comprising:
- a switching matrix known as second matrix (5), having input steering ports and output steering ports,
- a set of wavelength demultiplexing means (61 to 64), each of said means being connected to respective input steering ports of the second matrix,
- a set of wavelength multiplexing means (61' to 64'), each of said means being connected to respective output steering ports of the second matrix, said output redirection ports of the first matrix being coupled to said input steering ports of the second matrix via said set of wavelength demultiplexing means to obtain dynamic redirection of composite signals from the first stage to the second stage,
**characterised in that** the first optical matrix comprises a series of optical switching sub-matrices (1 to 4) arranged in parallel and independent,
and **in that**, the number of output redirection ports of the first matrix being greater than the number of wavelength demultiplexing means, the cross-connect comprises an optical concentrator (7) having more input ports (71 to 78) connected to said output redirection ports of the first matrix than the output ports (71' to 74') connected to said wavelength demultiplexing means.

2. Cross-connect (1000) according to claim 1 **characterised in that** said set of wavelength demultiplexing means (61 to 64) comprises at least one cyclic wavelength demultiplexing means (61 to 64).

3. Cross-connect (1000) according to claim 1 **characterised in that** the optical concentrator (7) comprises at least one extraction port (7a to 7d) for complex signals namely intended for a local network connected to said cross-connect.

4. Cross-connect (1000) according to claim 1 **characterised in that** said p wavelength band demultiplexing means (10, 20) are fitted with n output ports, n being greater or equal to 2 and corresponding to the total number of wavelength bands processed by said cross-connect, and **in that** said series of sub-matrices comprises n sub-matrices (1 to 4), each being dedicated to a separate wavelength band, comprising p input and output redirection ports as well as p input and output steering ports.

5. Cross-connect (1000) according to claim 4 **characterised in that**, said set of wavelength demultiplexing means comprises a number m less than nxp of cyclic wavelength demultiplexing means (61 to 64) and **in that** said concentrator (7) comprises nxp input ports (71 to 78) and m output ports (71' to 74') for dynamic redirection of the composite signals from the first stage (100) to the second stage (200).

6. Cross-connect (1000) according to claim 1 **characterised in that** the number of input redirection ports (11 to 42) of the first matrix (1 to 4) is greater than the number of wavelength multiplexing means (61' to 64') and **in that** the cross-connect comprises an optical deconcentrator (8) having more output ports (81' to 88') connected to said input redirection ports of the first matrix than input ports (81 to 84) connected to said wavelength multiplexing means to obtain dynamic redirection of composite signals from the second stage (200) to the first stage (100).

7. Cross-connect (1000) according to claim 6 **characterised in that** the optical deconcentrator (8) comprises at least one Add port (8a to 8d) for composite signals.

8. Cross-connect (1000) according to claim 6 **characterised in that** said set of wavelength multiplexing means comprises at least one cyclic wavelength multiplexing means (61' to 64') .

9. Cross-connect (1000) according to claim 6 **characterised in that** said p wavelength band multiplexing means (10, 20) are fitted with n input ports, n being greater or equal to 2 and corresponding to the total number of wavelength bands processed in said cross-connect, and **in that** said series of sub-matrices compmrises n sub-matrices (1 to 4), each being dedicated to a separate wavelength band, comprising p input and output redirection ports as well as p input and output steering ports.

10. Cross-connect (1000) according to claim 9 **characterised in that** said set of wavelength multiplexing means comprises a number m' less than nxp cyclic wavelength multiplexing means (61' to 64') and said deconcentrator (8) comprises m' input ports (81 to 84) and nxp output ports (81' to 88') for dynamic redirection of composite signals from the second stage (200) to the first stage (100).

11. Cross-connect (1000) according to claim 1 **characterised in that** the second stage comprises at least one modulated optical source with tuneable wavelength connected to an input branch of one of the wavelength multiplexing means.

12. Cross-connect (1000) according to claim 1 **characterised in that** the second matrix (5) is optical.

13. Cross-connect (1000) according to claim 1 **characterised in that** the second matrix is electrical and **in that** the second stage comprises opto-electric converters connected to the input steering ports of the second matrix as well as electro-optic converters connected to the output steering ports of the second matrix.

14. Cross-connect (1000) according to claim 1 **characterised in that** it comprises a third fibre-dedicated digital optical signal switching stage (300), each fibre-dedicated signal comprising digital optical signals of several bands carried by the same optical fibre.

15. Communication node comprising a cross-connect (1000) according to one of claims 1 to 14.

16. Cross-connect (1000) according to claim 2 **characterised in that** said demultiplexing means is chosen from optical de-interlacers and waveguide networks.

17. Cross-connect (1000) according to claim 8 **characterised in that** said cyclic wavelength multiplexing means (61' to 64') is chosen from optical de-interlacers and waveguide networks.

## Patentansprüche

1. Optischer Kreuzschienenverteiler (1000) mit multigranularer Architektur, umfassend:
- Eine erste Stufe (100) zum Schalten von digitalen optischen Kompositsignalen, wobei jedes Kompositsignal durch eine Vielzahl von digitalen optischen Signalen in einem gegebenen Wellenlängenband gebildet wird, wobei die Stufe umfasst:
- Eine erste optische Schaltmatrix (1 bis 4) mit Umleitungs-Eingangsports (1a bis 4b) und Umleitungs-Ausgangsports (1'a bis 4'b) sowie mit Weiterleitungs-Eingangsports (11 bis 42) und Weiterleitungs-Ausgangsports (11' bis 42'),
- eine Anzahl p höher als oder gleich 2 von Wellenlängenband-Demultiplexmitteln (10, 20), von denen ein jedes an verschiedene der besagten Umleitungs-Eingangsports angeschlossen ist,
- p Multiplexmittel im Wellenlängenband (10', 20'), von denen ein jedes jeweils an verschiedene der besagten Umleitungs-Ausgangsports angeschlossen ist,
- eine zweite Stufe (200) zum Schalten von digitalen optischen Kompositsignalen, umfassend:
- Eine Schaltmatrix, die sogenannte zweite Matrix, (5) mit Umleitungs-Eingangsports und Umleitungs-Ausgangsports
- eine Gruppe von Wellenlängenband-Demultiplexmitteln (61 bis 64), von denen ein jedes jeweils an verschiedene Umleitungs-Eingangsports der zweiten Matrix angeschlossen ist,
- eine Gruppe von Wellenlängenband-Multiplexmitteln (61' bis 64'), von denen ein jedes jeweils an verschiedene der Umleitungs-Ausgangsports der zweiten Matrix angeschlossen ist,
wobei die besagten Weiterleitungs-Ausgangsports der ersten Matrix über die besagte Gruppe von Wellenlängen-Demultiplexmitteln mit den besagten Umleitungs-Ausgangsports der zweiten Matrix gekoppelt sind, um das dynamische Weiterleiten von Kompositsignalen der ersten Stufe an die zweite Stufe zu gewährleisten,
**dadurch gekennzeichnet, dass** die erste optische Matrix aus einer Reihe von optischen Teilschaltmatrizen (1 bis 4), welche parallel und unabhängig von einander angeordnet sind, besteht,
und dass, da die Anzahl der Weiterleitungs-Ausgangsports der ersten Matrix höher ist als die Anzahl der Wellenlängen-Demultiplexmittel, der Kreuzschienenverteiler einen optischen Konzentrator (7) mit an die besagten Weiterleitungs-Ausgangsports der ersten Matrix angeschlossenen Eingangsports (71 bis 78) aufweist, deren Anzahl höher ist als die Anzahl der Ausgangsports (71' bis 74'), welche an die besagten Wellenlängen-Demultiplexmittel angeschlossen sind.

2. Kreuzschienenverteiler (1000) nach Anspruch 1, **dadurch gekennzeichnet, dass** die besagte Gruppe von Wellenlängen-Demultiplexmitteln (61 bis 64) mindestens ein zyklisches Wellenlängen-Demultiplexmittel (61 bis 64) umfasst.

3. Kreuzschienenverteiler (1000) nach Anspruch 1, **dadurch gekennzeichnet, dass** der optische Konzentrator (7) mindestens einen Port (7a bis 7d) zum Extrahieren von Kompositsignalen, welche insbesondere für ein mit dem besagten Kreuzschienenverteiler verbundenes lokales Netzwerk bestimmt sind, umfasst.

4. Kreuzschienenverteiler (1000) nach Anspruch 1, **dadurch gekennzeichnet, dass** die besagten p Wellenlängenband-Demultiplexmittel (10, 20) mit n Ausgangsports ausgestattet sind, wobei n größer als oder gleich 2 ist und der Gesamtanzahl der im besagten Kreuzschienenverteiler verarbeiteten Wellenlängenbänder entspricht, und dass die besagte Reihe von Teilmatrizen n Teilmatrizen (1 bis 4) umfasst, von denen eine jede einem verschiedenen Wellenlängenband zugeordnet ist, umfassend p Weiterleitungs-Eingangs- und Ausgangsports sowie p Umleitungs-Eingangs- und Ausgangsports.

5. Kreuzschienenverteiler (1000) nach Anspruch 4, **dadurch gekennzeichnet, dass** die besagte Gruppe von Wellenlängen-Demultiplexmitteln eine Anzahl von m zyklischen Wellenlängen-Demultiplexmitteln (61 bis 64), welche niedriger als nxp ist, umfasst, und dass der besagte Konzentrator (7) nxp Eingangsports (71 bis 78) und m Ausgangsports (71' bis 74') zum dynamischen Weiterleiten von Kompositsignalen der ersten Stufe (100) an die zweite Stufe (200) umfasst.

6. Kreuzschienenverteiler (1000) nach Anspruch 1, **dadurch gekennzeichnet, dass** die Anzahl der Weiterleitungs-Eingangsports (11 bis 42) der ersten Matrix (1 bis 4) höher ist als die Anzahl der Wellenlängen-Multiplexmittel (61' bis 64'), und dass der Kreuzschienenverteiler einen optischen Dekonzentrator (8) mit mehr Ausgangsports (81' bis 88'), welche an die besagten Weiterleitungs-Eingangsports der ersten Matrix angeschlossen sind, als Eingangsports (81 bis 84), welche an die besagten Wellenlängen-Multiplexmittel angeschlossen sind, aufweist, um ein dynamisches Weiterleiten der Kompositsignale der zweiten Stufe (200) an die erste Stufe (100) zu gewährleisten.

7. Kreuzschienenverteiler (1000) nach Anspruch 6, **dadurch gekennzeichnet, dass** der optische Dekonzentrator (8) mindestens einen Port (8a bis 8d) zum Einfügen von Kompositsignalen aufweist.

8. Kreuzschienenverteiler (1000) nach Anspruch 6, **dadurch gekennzeichnet, dass** die besagte Gruppe von Wellenlängen-Multiplexmitteln mindestens ein zyklisches Wellenlängen-Multiplexmittel (61' bis 64') umfasst.

9. Kreuzschienenverteiler (1000) nach Anspruch 6, **dadurch gekennzeichnet, dass** die besagten p Wellenlängenband-Multiplexmittel (10, 20) mit n Eingangsports ausgestattet sind, wobei n höher als oder gleich 2 ist und der Gesamtanzahl der in dem besagten Kreuzschienenverteiler (1000) verarbeiteten Wellenlängenbänder entspricht, und dass die besagte Reihe von Teilmatrizen n Teilmatrizen (1 bis 4) umfasst, wobei eine jede einem unterschiedlichen Wellenlängenband zugeordnet ist, umfassend p Weiterleitungs-Eingangs- und Ausgangsports sowie p Umleitungs-Eingangs- und Ausgangsports.

10. Kreuzschienenverteiler (1000) nach Anspruch 9, **dadurch gekennzeichnet, dass** die besagte Gruppe von Wellenlängen-Multiplexmitteln eine Anzahl m' von zyklischen Wellenlängen-Multiplexmitteln (61' bis 64') umfasst, wobei m' niedriger als nxp ist, und dass der besagte Dekonzentrator (8) m' Eingangsports (81 bis 84) und nxp Ausgangsports (81' bis 88') für das dynamische Weiterleiten von Kompositsignalen der zweiten Stufe (200) an die erste Stufe (100) umfasst.

11. Kreuzschienenverteiler nach Anspruch 1, **dadurch gekennzeichnet, dass** die zweite Stufe mindestens eine modulierte, in der Wellenlänge abstimmbare optische Quelle umfasst, welche an einen Eingangszweig eines der Wellenlängen-Multiplexmittel angeschlossen ist.

12. Kreuzschienenverteiler (1000) nach Anspruch 1, **dadurch gekennzeichnet, dass** die zweite Matrix (5) eine optische Matrix ist.

13. Kreuzschienenverteiler nach Anspruch 1, **dadurch gekennzeichnet, dass** die zweite Matrix eine elektrische Matrix ist, und dass die zweite Stufe optische/elektrische Wandler, welche an die Umleitungs-Eingangsports der zweiten Matrix angeschlossen sind, sowie optische/elektrische Wandler, welche an die Umleitungs-Ausgangsports der zweiten Matrix angeschlossen sind, umfasst.

14. Kreuzschienenverteiler (1000) nach Anspruch 1, **dadurch gekennzeichnet, dass** er eine dritte Stufe (300) zum Schalten von faserzugeordneten digitalen optischen Signalen umfasst, wobei jedes faserzugeordnete Signal digitale optische Signale von mehreren Bändern, welche von derselben optischen Faser transportiert werden, umfasst.

15. Kommunikationsknoten mit einem Kreuzschienenverteiler (1000) nach einem der Ansprüche 1 bis 14.

16. Kreuzschienenverteiler (1000) nach Anspruch 2, **dadurch gekennzeichnet, dass** das besagte Demultiplexmittel unter den optischen Entschachtlern und den Leiternetzen gewählt wird.

17. Kreuzschienenverteiler (1000) nach Anspruch 8, **dadurch gekennzeichnet, dass** das besagte zyklische Wellenlängen-Multiplexmittel (61' bis 64') unter den optischen Verschachtlern und den Leiternetzen gewählt wird.
